# EUROPÄISCHE PATENTSCHRIFT

(11) **EP 3 481 529 B1**
(45) Veröffentlichungstag und Bekanntmachung des Hinweises auf die Patenterteilung: **11.08.2021**
(21) Anmeldenummer: 17751608.5
(22) Anmeldetag: 08.07.2017
(51) Int. Cl.: B01D 45/12

(54) **VERFAHREN UND VORRICHTUNG ZUR WIEDERGEWINNUNG VON SPRITZNEBELN AUS SPRITZLACKIERKABINEN**
PROCESS ANS DEVICE FOR RECYCLING OVERSPRAY FROM A SPRÜHLACKIERANLAGE
PROCÉDÉ ET SYSTÈME POUR RECYCLER L'OVERSPRAY D'UNE INSTALLATION DE PEINTURE PAR PULVÉRISATION

(30) Priorität: 10.07.2016 DE 102016008255
(43) Veröffentlichungstag der Anmeldung: 15.05.2019
(73) Patentinhaber: Wenker GmbH & Co. Kg, 48683 Ahaus (DE)
(72) Erfinder: LEERS, Franz, 48683 Ahaus (DE)
(74) Vertreter: Münch, Volker
(86) Internationale Anmeldenummer: PCT/EP2017/000802
(87) Internationale Veröffentlichungsnummer: WO 2018/010836

(56) Entgegenhaltungen:
- EP-A1- 2 452 757
- WO-A1-2014/139669
- WO-A1-2016/113129
- DE-A1-102010 030 280
- DE-U1-202014 001 981
- JP-A- S5 942 065

## Beschreibung

### Gebiet der Erfindung

Die vorliegende Erfindung betrifft ein Verfahren zur Wiedergewinnung von Spritznebeln oder Overspray aus Spritzlackierkabinen.

Außerdem betrifft die vorliegende Erfindung eine Vorrichtung zur Wiedergewinnung von Spritznebeln oder Overspray aus Spritzlackierkabinen.

Nicht zuletzt betrifft die vorliegende Erfindung die Verwendung der wiedergewonnenen Spritznebel oder des wiedergewonnenen Overspray als Spritzlack.

### Stand der Technik

Der in der vorliegenden Anmeldung zitierte Stand der Technik wird durch Bezugnahme Bestandteil der Anmeldung.

Spezifisch für die indirekte Lackverarbeitung durch Zerstäuben oder Spritzen sind die Spritznebel. Damit verbunden sind eine Abgabe von Lösemitteln an die Umgebung und der Overspray. Aus Arbeits- und Umweltschutzgründen sind deshalb Maßnahmen zu ergreifen, die nicht unbeträchtlichen Lösemittel- und Lacknebelmengen, die das Lackierobjekt nicht treffen, abzuführen, eventuell zurückzugewinnen oder zu entsorgen. Die entstehenden Spritznebel haben auch in prozesstechnischer Hinsicht unerwünschte Nebeneffekte. Durch vagabundierende Nebel können bereits lackierte Objekte kontaminiert werden, wenn sie sich auf der frischen, noch viskosen Lackierung niederschlagen. Filmfehler in Form von Kratern sind häufig die Folge.

Es ist deshalb notwendig, die Spritznebel und verdunstenden Lösemittel unter Kontrolle zu halten. Dazu gibt es in handwerklichen Betrieben Spritzstände, die durch Absaugen und Filtern Lösemittel und Spritznebel mithilfe der Luftführung durch Wasservorhänge hinter dem Spritzstand diese Aufgabe erledigen können. Indes ist dieses Verfahren nicht dazu geeignet, den Spritzlack quantitativ oder nahezu quantitativ wiederzugewinnen.

Bei der industriellen Verarbeitung werden die Spritzeinrichtungen in geschlossene Kabinen gebracht. In diesen werden die verdunstenden Lösemittel und der Sprühnebel durch Zufuhr von Frischluft entfernt. Letzteres sorgt in der Kabine für eine möglichst laminare Strömung von oben nach unten. Für Luftsinkgeschwindigkeiten von 0,2-0,5 m/Sekunde müssen deshalb permanent pro Quadratmeter Kabinenfläche 0,2-0,5 m³/Sekunde oder 720 bis 1800 m³/Stunde konditionierter Luftmengen zugeführt werden. Bei Kabinengrundflächen von 200 m² sind das stündlich bis zu 400.000 m³ gereinigte und konditionierte Frischluft. So können Lackierfehler vermieden und die MAK-Werte der Arbeitsstoffe eingehalten werden.

Zur schnellen und vollständigen Spritznebelaufnahme werden die Spritznebel durch Verengungen in den Absaugvorrichtungen stark beschleunigt, um anschließend mit hoher Relativgeschwindigkeit in eine wässrige Phase aufgenommen zu werden. Das gelingt in den nach dem Venturi-Prinzip arbeitenden Diffusoren besonders gut. Nach der Beschleunigung der Spritznebel beladenen Abluft werden durch die Erweiterung des Öffnungsquerschnitts der Venturi-Düsen starke Wirbel gebildet. Der dabei entstehende Unterdruck zieht die Waschflüssigkeit in den Luftstrom, wodurch die Lacknebel eingefangen werden.

Die in dieser Weise gewonnene Flüssigkeit wird einem Systemtank zugeführt, worin sich Lackschlamm absetzt, der in ein Lackschlammabsetzbecken überführt wird. Eine direkte Wiedergewinnung der ursprünglich verwendeten überschüssigen Spritzlacke ist mithilfe dieser Technologie nicht möglich.

(Vgl. Arthur Goldschmidt, Hans-Joachim Streitberger, BASF-Handbuch Lackiertechnik, Vincentz Verlag, Hannover, 2002, Seiten 583-588, »4.2.1.5 Kabinenkonditionierung und Spritznebelbeseitigung«)

Im Falle der Spritzlackierung von Pulverlacken wird der Overspray durch die Schwerkraft und die vertikal nach unten gerichtete Luftströmung aus den Kabinen geführt. Zur Rückgewinnung dienen Zyklone, worin der mit Pulverlack beladene Luftstrom durch tangentiale Zufuhr in Rotation versetzt wird. Die Zentrifugalkräfte treiben die Pulverpartikel zur Zyklonwand, wo sie aufgrund der Schwerkraft nach unten fallen, um dadurch in einem Auffangbehälter gesammelt zu werden.

(Vgl. Arthur Goldschmidt, Hans-Joachim Streitberger, BASF-Handbuch Lackiertechnik, Vincentz Verlag, Hannover, 2002, Seiten 605-588, »Rückgewinnung«)

Weitere Verfahren, die die Wiederverwendung von Overspray zum Ziel haben, sind ebenfalls bekannt.

So geht aus der deutschen Patentanmeldung DE 44 21 172 A1 ein Verfahren zur Herstellung eines bei 50 bis 90 °C trocknenden Lacks für eine Steinschlagschutzschicht hervor, bei dem man nicht koaguliertes Overspray aus wasserlöslichen Basislacken enthaltendem Kabinenabwasser durch Wasserentzug auf eine Festkörperkonzentration von etwa 10 bis 35 Gew.-% bringt und mit den für die gewünschten Eigenschaften der Steinschlagschutzschicht erforderlichen Komponenten versetzt. Der durch dieses Verfahren gewonnene Lack ist aber nicht mehr für die ursprüngliche Anwendung als Basislack geeignet.

Aus der internationalen Patentanmeldung WO 92/19686 A2 geht ein Verfahren zur Behandlung und Wiedergewinnung des Oversprays aus der Spritzapplikation von wässrigen Lacken hervor, bei dem alle Feststoffe durch mindestens einen Elektrophoreseschritt abgetrennt und wiederverwendet werden. Um wieder einen mit dem ursprünglich eingesetzten Spritzlack vergleichbaren Spritzlack zu erhalten, müssen die abgetrennten Feststoffe aufgearbeitet werden, was das Verfahren insgesamt aufwändig macht.

Aus dem Gebrauchsmuster DE 20 2014 001 981 U1 ist eine Anlage zum Abscheiden von Lackpartikel aus dem Luftstrom einer Beschichtungsanlage bekannt, bei der der Luftstrom über eine Zuführung einer Trenneinrichtung zugeleitet wird, in der die Lackpartikel aus der Luft abgetrennt werden. Die bekannte Anlage sieht eine Eiserzeugungseinrichtung vor, durch die Eiskristallteilchen erzeugt werden, die in den Luftstrom eingeblasen werden. Der Nachteil des Verfahrens, dass mit dieser Anlage durchgeführt wird, ist, dass durch die Zugabe der Eiskristallteilchen die Zusammensetzung der Lackpartikel nicht mehr dem ursprünglichen Lack entspricht.

In dem älteren nachveröffentlichten Recht WO 2016/113129 A1 wird ein Verfahren zum Betreiben einer Oberflächenbehandlungsanlage beschrieben, bei dem der Overspray, der in der Beschichtungskabine entsteht, von einem Luftstrom aufgenommen wird. Der mit Overspray beladene Luftstrom wird als Abluftstrom zu einer Abscheideeinheit geführt, in der der Overspray abgeschieden wird. Dem Abluftstrom wird in einem Zuführbereich stromauf der Abscheideeinheit und/oder in ihrem Innenraum ein Filterhilfsmaterial zugeführt, das mit dem Overspray ein Abscheidegemisch bildet, das sich in oder an einer Abscheideeinheit abscheidet. Als Filterhilfsmittel können Wasser oder Glykole verwendet werden. Das Abscheidegemisch wird von einer Abscheideeinheit aufgefangen, wonach das Filterhilfsmittel wieder verdampft und der Overspray zurückbleibt. Der Nachteil dieses Verfahrens ist, dass der Overspray als solcher nicht wiedergewonnen, sondern nur entsorgt werden kann.

Graupel ist eine Form von Niederschlag, bei dem Schneekristalle durch angefrorene Wassertröpfchen zu kleinen, bis zu 5 mm großen Kügelchen verklumpt werden. Bei Korngrößen von unter 1 mm Durchmesser spricht man auch von Griesel. Die Partikel sind im Vergleich zu Hagel deutlich kleiner und weisen lediglich einen maximalen Durchmesser bis zu 5 mm auf. Ihre Dichte ist geringer als die von Hagelkörnern und sie haben eine rauere Struktur. Dadurch fallen sie langsamer und können kaum Schaden anrichten. Im Gegensatz zum Hagel fallen Graupel und Griesel hauptsächlich im Winter bei Temperaturen um 0 °C.

### Aufgabe der vorliegenden Erfindung

Der vorliegenden Erfindung lag demnach die Aufgabe zu Grunde eine Vorrichtung und ein Verfahren zur Wiedergewinnung von Spritznebeln aus Spritzlackierkabinen zu finden, mit deren Hilfe die Spritznebel quantitativ oder nahezu quantitativ als Spritzlacke mit denselben oder nahezu denselben Eigenschaften wie die ursprünglich eingesetzten Spritzlacke wiedergewonnen und für den selben Verwendungszweck wieder angewandt werden können.

### Lösung der vorliegenden Aufgabe

Diese und weitere Aufgaben werden nach dem Vorschlag der Erfindung durch die Vorrichtung und das Verfahren zur Wiedergewinnung von Spritznebeln aus Spritzlackierkabinen mit den Merkmalen der unabhängigen Patentansprüche gelöst. Vorteilhafte Ausgestaltungen der Erfindung sind durch die Merkmale der Unteransprüche gegeben.

### Ausführliche Beschreibung der Erfindung

Die vorliegende Erfindung betrifft eine Vorrichtung zur Wiedergewinnung von Spritznebeln aus Spritzlackierkabinen.

Spritzlackierkabinen sind üblich und bekannt und können je nach Verwendungszweck unterschiedliche Dimensionen haben. So gibt es Spritzlackierkabinen, die vor allem in Handwerksbetrieben eingesetzt werden, oder industriellen Anlagen, die kontinuierlich oder diskontinuierlich betrieben werden. Ein Haupteinsatzgebiet für solche industriellen Spritzlackierkabinenist die Automobilserienlackierung (OEM, Original Equipment Manufacturing) sowie die Automobilzuliefererindustrie.

Im Allgemeinen haben die Spritzlackierkabinen eine vertikale Außenwand, eine horizontale Decke und einen horizontalen Boden, die einen geschlossenen, gasdichten und flüssigkeitsdichten Raum bilden. Je nach Größe können sie mehrere Stockwerke hoch und von innen und außen begehbar sein.

Sie weisen mindestens eine, insbesondere eine, für den jeweiligen Verwendungszweck geeignet dimensionierte Spritzlackierkabine mit mindestens einer, insbesondere einer Luftzuleitung, über die gereinigte Frischluft in mindestens einen, insbesondere einen Verteilerraum eingeleitet wird. Von da aus strömt die Luft durch eine horizontal angeordnete, luftdurchlässige Filterdecke vorzugsweise als laminare oder nahezu laminare Luftströmung in den Spritzkabinenraum.

In dem Spritzkabinenraum ist mindestens ein mit einem Spritzlack zu lackierendes Objekt, beispielsweise Holzteile, Möbel, weiße Ware, Flugzeugteile oder Kraftfahrzeugkarosserien vorzugsweise an Transportvorrichtungen hängend oder vorzugsweise auf Transportvorrichtungen stehend platziert. Mithilfe der Transportvorrichtungen können beispielsweise Kraftfahrzeugkarosserien aus der Spritzkabine zu weiteren Vorrichtungen in den Lackierstraßen wie Trockenöfen oder Bestrahlungsvorrichtungen weitergeführt werden. Vergleichbares gilt für die hängend fixierten Objekte.

Auf die Oberfläche des mindestens einen zu lackierenden Objekts wird mithilfe mindestens einer Spritzlackiervorrichtung mit mindestens einer, insbesondere einer, Sprühdüse, der Spritzlack appliziert.

Als Spritzlackiervorrichtung werden vorzugsweise manuell geführte Spritzlackierpistolen oder computergesteuerte Spritzlackierroboter verwendet.

Bei dem Spritzlack selbst kann es sich um einen wässrigen oder lösemittelhaltigen, physikalisch trocknenden Lack, oxidativ härtenden Lack, Zweikomponentenlacke, Einbrennlacken oder strahlenhärtbaren Lack, der insbesondere mit IR-Strahlung, sichtbarem Licht, UV-Strahlung und/oder Elektronenstrahlung gehärtet werden kann. Die unterschiedlichen Härtungsmechanismen können in ein und demselben Spritzlack angewandt werden. Man spricht dann auch von »Dual-Cure-Lacken«.

Der Spritzlack kann in unterschiedlichen Anwendungsbereichen als Schiffslack, Bautenlack, Möbellack oder Kraftfahrzeuglack angewandt werden. Beispielsweise wird er bei der Kraftfahrzeuglackierung in der Form von Klarlack, Unidecklack, Basislack, Füller, Steinschlagschutzlack, Unterbodenschutzlack und Reparaturlack verwendet.

Spritzlacke dieser Art sind üblich und bekannt und am Markt erhältlich. Beispiele geeigneter Rezepturen finden sich in dem Lehrbuch von Bodo Müller und Ulrich Poth, »Lackformulierungen und Lackrezeptur«, Vincentz Verlag, Hannover, 2003, Seiten 73 bis 222.

Im Allgemeinen verlässt der Spritzlack die Sprühdüsen der Spritzlackiervorrichtungen in der Form eines Lackspritzkegels und trifft auf die Oberfläche des zu lackierenden Objekts auf. Dabei treffen bekanntermaßen erhebliche Mengen an Spritzlack nicht auf der Oberfläche auf, sondern bilden Spritznebel oder Overspray.

Die Spritznebel werden durch den laminaren Luftstrom durch einen horizontalen, luft- und spritznebeldurchlässigen Siebboden entfernt. Sie gelangen in eine unterhalb des Siebbodens angeordnete mindestens eine, insbesondere eine, Spritznebellenkung und treten durch mindestens einen, insbesondere einen, weiteren horizontalen, luft- und spritznebeldurchlässigen Siebboden in eine darunter angeordnete mindestens eine, insbesondere eine Verwirbelungskammer ein.

Die mindestens eine Verwirbelungskammer enthält mindestens eine Vorrichtung zur Bildung von Luft- und Spritznebelwirbel. Vorzugsweise werden hierfür vertikal oder horizontal rotierende Rührer und/oder Umlenkbleche verwendet. In die Luft- und Spritznebelwirbel wird über mindestens eine Kältemittelzuleitung mit mehreren, bevorzugt mehr als drei, besonders bevorzugt mehr als fünf und ganz besonders bevorzugt mehr als acht Kältemitteldüsen mindestens ein Kältemittel zugeleitet und eingedüst. Zweck ist, in der Verwirbelungskammer die Bedingungen nachzustellen, unter denen sich in der Natur Graupel- und/oder Grieselpartikel in Wolken bilden.

Vorzugsweise weist das mindestens eine Kältemittel eine Temperatur von -190 °C bis 0 °C, bevorzugt -100 °C bis -4 °C und insbesondere -50 °C bis -10 °C auf. Vorzugsweise ist das Kältemittel bei Raumtemperatur und Atmosphärendruck ein Gas. Besonders bevorzugt werden ökologisch unbedenkliche, nicht toxische, Gase verwendet. Beispiele geeigneter Gase sind Luft, Stickstoff, Kohlendioxid und Helium. Insbesondere wird Luft verwendet. Die Gase können getrocknet sein oder Spuren von Wasser enthalten, die sich als Eis auf den sich bildenden Graupel- und/oder Grieselpartikel niederschlagen.

Die Graupel- und/oder Grieselpartikel fallen nach unten durch einen am unteren Ende oder am Boden der Verwirbelungskammer angeordneten horizontalen, luft- und partikeldurchlässigen Siebboden in eine darunter angeordnete Luft- und Partikellenkung, die sie in eine Vorrichtung zur Abscheidung der Partikel aus der Gasphase befördert. Vorzugsweise sind diese Bauteile thermisch isoliert und/oder von außen gekühlt.

An und für sich können alle üblichen und bekannten Vorrichtungen zur Abscheidung von festen Partikeln aus der Gasphase verwendet werden. Erfindungsgemäß ist es indes von Vorteil, wenn man hierfür eine Mehrstufenzentrifuge, insbesondere Zweistufenzentrifuge, und/oder ein Zyklon bzw. einen Zyklonabscheider oder Fliehkraftabscheider verwendet.

Zweistufenzentrifugen sind seit langem bekannt und werden im Einzelnen in der deutschen Offenlegungsschrift DE 199 49 289 A1, der europäischen Patentanmeldung EP 1 092 478 A1, der deutschen Offenlegungsschrift DE 36 22 959 A1, dem Gebrauchsmuster DE 1 947 485 U oder dem Gebrauchsmuster DE 1 823 265 U beschrieben. Üblicherweise arbeiten die Zweistufenzentrifugen kontinuierlich und haben einen sich um eine senkrechte Achse drehenden, nach oben konische erweiternden Korb, der einen oberen Außenrand zum Abschleudern der Partikel aufweist.

Zyklone oder Zyklonabscheider sind ebenfalls seit langem bekannt. Sie dienen der Abscheidung von feinen Partikeln, bestehend aus Luft/Feststoffgemischen mithilfe von Fliehkraft und Schwerkraft. Multi-, Mehrfach- oder Monozyklone sind heute auf dem Markt gängige Zyklonabscheider. Das zu trennende Gemisch wird einem zylindrischen Behälter mit meist konischem Unterteil tangential oder axial zugeführt. Die Strömung wird dabei entweder durch den tangentialen Eintritt des Gemisches erzeugt oder durch am Umfang des Zyklongehäuses angebrachte Leitschaufeln. Durch die sich im Abscheidungsraum ausbildenden Rotationsströmungen wirken auf die abzutrennenden Partikel Fliehkräfte, die sie nach außen schleudern. Von der Wand des Zyklons sinken die Partikel unter Schwerkraftwirkung nach unten in einen Sammelbehälter.

(Römpp Lexikon Lacke und Druckfarben, Georg Thieme Verlag, Stuttgart, 1998, »Zyklonabscheider«).

Die in dieser Weise abgetrennten Graupel- und/oder Grieselpartikel fallen durch einen Austrag für die Partikel in mindestens einen darunter angeordneten Auffangbehälter, worin sie aufschmelzen und wieder einen flüssigen Spritzlack bilden, der dieselben oder im Wesentlichen dieselben Eigenschaften wie der ursprüngliche Spritzlack hat und daher demselben Verwendungszweck zugeführt werden kann.

Das Aufschmelzen kann mithilfe von Heizungsvorrichtungen, beispielsweise Induktionsheizungen, die sich im Boden und/oder in und/oder auf den Wandungen des mindestens einen Auffangbehälters befinden, beschleunigt werden. Außerdem können Tauchheizungen zusätzlich oder alleine verwendet werden.

Zur Verbesserung der Homogenität und die Vermeidung der Bildung von Lackschlämmen kann der Inhalt des mindestens einen Auffangbehälters gerührt werden.

Das Gemisch aus zugeführter Luft und gasförmigem Kältemittel wird über mindestens einen Abluftkanal, der im unteren Bereich der Vorrichtung zur Wiedergewinnung von Spritznebeln aus Spritzlackierkabinen angeordnet ist, entfernt.

Die Vorrichtung zur Wiedergewinnung von Spritznebeln aus Spritzlackierkabinen ist vorzugsweise aus korrosionsfesten, gegenüber Lösemitteln und Wasser resistenten und gegenüber Kälte und Hitze und raschen Temperaturwechseln stabilen Materialien aufgebaut. Beispiele geeigneter Materialien sind gegenüber Säuren und Basen stabile Klinker für die Außenwände, spezielle Kartonagen für die Filterdecke, gegenüber Kälte und Hitze stabile Kunststoffe, die in der Kälte nicht Verspröden und in der Hitze unter Belastung nicht kriechen, sowie V2A-Stahl oder V4A- Stahl.

Die Vorrichtung zur Wiedergewinnung von Spritznebeln aus Spritzlackierkabinen weist des Weiteren eine übliche und bekannte Mess- und Regelperipherie zur elektronischen, hydraulischen, pneumatischen und/oder mechanischen Steuerung der Materialströme mit den entsprechenden Sensoren auf.

Es versteht sich, dass die vorstehend genannten und nachstehend näher erläuterten Merkmale nicht nur in den angegebenen Kombinationen und Konfigurationen, sondern auch in anderen Kombinationen und Konfigurationen oder in Alleinstellung einsetzbar sind, ohne den Rahmen der vorliegenden Erfindung zu verlassen.

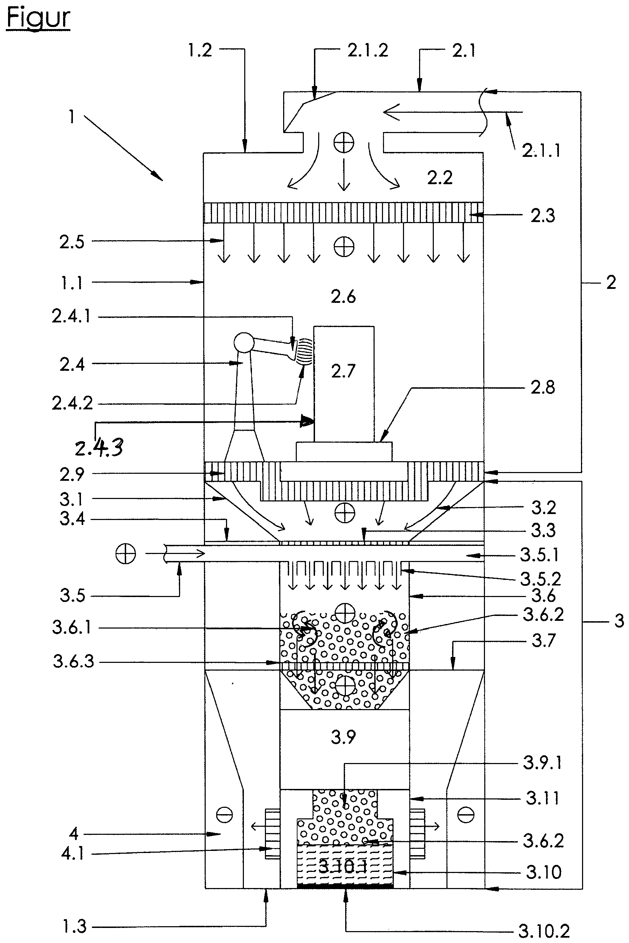

### Kurze Beschreibung der Figur

Die Erfindung wird nun anhand von Ausführungsbeispielen näher erläutert, wobei Bezug auf die beigefügte Prinzipskizze (Figur) genommen wird. Es zeigt in vereinfachter, in nicht maßstäblicher Darstellung:
Die einzige Figur vertikaler Längsschnitt durch eine Vorrichtung 1 mit Spritzkabine 2 und Vorrichtung 3 zur Wiedergewinnung von Spritznebeln.

In der Figur haben die Bezugszeichen die folgende Bedeutung:
- 1: Vorrichtung mit Spritzkabine 2 und Vorrichtung 3
- 1.1: Außenwand
- 1.2: Decke
- 1.3: Boden
- 2: Spritzlackierkabine
- 2.1: Luftzuleitung
- 2.1.1: Zuluft
- 2.1.2: Umlenkblech
- 2.2: Verteilerraum
- 2.3: luftdurchlässige Filterdecke
- 2.4: Spritzlackiervorrichtung
- 2.4.1: Sprühdüsen
- 2.4.2: Lackspritzkegel
- 2.4.3: applizierter Spritzlack
- 2.5: Luftströmung
- 2.6: Spritzkabinenraum
- 2.7: zu lackierendes Objekt
- 2.8: Transportvorrichtung
- 2.9: luft- und spritznebeldurchlässiger Siebboden
- 3: Vorrichtung zur Wiedergewinnung von Spritznebeln
- 3.1: Spritznebellenkung
- 3.2: Spritznebel
- 3.3: luft- und spritznebeldurchlässiger Siebboden
- 3.4: Trennboden
- 3.5: Kältemittelzuleitung
- 3.5.1: Kältemittel
- 3.5.2: Kältemitteldüsen
- 3.6: Verwirbelungskammer
- 3.6.1: Luft- und Spritznebelwirbel
- 3.6.2: Graupel- und/oder Grieselpartikel
- 3.6.3: luft- und partikeldurchlässiger Siebboden
- 3.7: Trennboden
- 3.8: Luft- und Partikellenkung
- 3.9: Vorrichtung zur Abscheidung der Partikel 3.6.2 aus der Gasphase
- 3.9.1: Austrag für die Partikel 3.6.2
- 3.10: Auffangbehälter
- 3.10.1: wiedergewonnener Spritzlack
- 3.10.2: Heizvorrichtung
- 4: Abluftkanal
- 4.1: Polizeifilter (Nachfilter)

Pluszeichen im Kreis Luft- und Materialzufuhr
Minuszeichen im Kreis Luftabsaugung

### Ausführliche Beschreibung der Figur

Die Figur zeigt einen vertikalen Längsschnitt entlang der Mittelachse einer Vorrichtung 1 zur Wiedergewinnung von Spritznebeln 3.2 aus Spritzlackierkabinen 2.

Die Vorrichtung 1 war für die Spritzlackierung von Automobilkarosserien 2.7 ausgelegt und entsprechend dimensioniert. Sie ist Bestandteil einer Lackierstraße, wie sie üblicherweise in der Automobilindustrie verwendet wird. Die gasdichten und flüssigkeitsdichten Außenwände 1.1, die gasdichte und flüssigkeitsdichte horizontale Decke 1.2 und der gasdichte und flüssigkeitsdichte Boden 1.3 waren aus Klinker aufgebaut. Die Außenwände 1.1 wiesen verschließbare Serviceöffnungen und begehbare Türen sowie entsprechend angeordnete begehbare Umgänge mit Geländer auf, über die das Betriebspersonal zu den einzelnen Bauteilen gelangen konnte (nicht wiedergegeben).

Über eine Luftzuleitung 2.1 wurde die an einem Umlenkblech 2.1.2 umgelenkte Zuluft 2.1.1 einem Verteilerraum 2.2 zugeführt und durch eine luftdurchlässige Filterdecke 2.3 als Laminarströmung 2.5 in den Spritzkabinenraum 2.6 eingeleitet. Hierbei deuten die Pfeile ohne Bezugszeichen und die Pluszeichen im Kreis die Strömungsrichtung an.

Im Spritzkabinenraum 2.6 befanden sich mehrere computergesteuerte Spritzlackierroboter mit Spritzdüsen 2.4.1, die einen Lackspritzkegel 2.4.2 verströmten. Der Spritzlack 2.4.3 traf auf die Automobilkarosserie auf, wobei erhebliche Mengen an Spritznebel 3.2 aus Wasser und Lackbestandteilen wie Pigmente, Bindemittel, Vernetzungsmittel, Verdicker, Antioxidantien und Tenside erzeugt wurden.

Die Automobilkarosserie 2.7 war auf einer Transportvorrichtung 2.8 befestigt, mit deren Hilfe die Automobilkarosserie 2.7 nach der Lackierung aus der Vorrichtung 1 bzw. dem Spritzkabinenraum 2.6 herausgefahren und zur nächsten Station der Lackierstraße, beispielsweise einem Ofen zur thermischen Härtung des applizierten Spritzlacks 2.4.3, weiter sich jedoch schräg oder vorsichtig des Bassisten gefahren wurde.

Die Spritznebel 3.2 wurden durch die Laminarströmung 2.5 über einen Siebboden 2.9 ausgetragen und gelangten in eine nach unten sich konisch verjüngende Spritznebellenkung 3.1, durch die die Spritznebel 3.2 über einen luft- und spritznebeldurchlässigen Siebboden 3.3, der von einem Trennboden 3.4 gehalten wurde, in eine Verwirbelungskammer 3.6 gelenkt wurden.

Die Verwirbelungskammer 3.6 wies in ihrem oberen Bereich fünf rohrförmige Kältemittelzuleitungen 3.5 mit jeweils fünf nach unten gerichteten Kältemitteldüsen 3.5.2 auf, durch die -10 °C kalte Luft als Kältemittel 3.5.1 in die Spritznebel 3.2 in der Verwirbelungskammer 3.6 eingedüst wurde. Dadurch entstanden kalte Luft- und Spritznebelwirbel 3.6.2, in denen sich Graupel- und Grieselpartikel 3.6.2 bildeten. Diese fielen, nachdem sie ihre maximale Größe erreicht hatten, nach unten durch einen luft- und partikeldurchlässigen Siebboden 3.6.3, der von einem Trennboden 3.7 gehalten wurde, und eine weitere Luft- und Partikellenkung 3.8 in eine rotierende Zweistufenzentrifuge 3.9, worin die Partikel 3.6.2 aus der Gasphase abgeschieden wurden.

Die Partikel 3.6.2 fielen über einen Austrag 3.9.1 in einen Auffangbehälter 3.10, worin sie mithilfe einer unter dem Boden angeordneten Heizplatte 3.10.2 aufgeschmolzen wurden und wieder einen flüssigen Spritzlack 3.10.1 bildeten. Der Auffangbehälter 3.10 konnte aus der Vorrichtung 1 bzw. aus der Vorrichtung 3 herausgefahren werden und sein Inhalt demselben Verwendungszweck wie der ursprünglich Spritzlack 2.4.3 zugeführt werden. Dies war ein erheblicher Vorteil gegenüber den Verfahren des Standes der Technik und hatte signifikante Einsparungen an Energie und Kosten zur Folge.

Die Abluft der Vorrichtung 1 wurde über Polizeifilter oder Nachfilter 4.1 in Abluftkanäle 4, die zwischen dem Trennboden 3.7 und dem Boden 1.3 der Vorrichtung 1 angeordnet waren, geleitet und gegebenenfalls wieder der Zuluft 2.1.1 hinzu gemischt.

## Patentansprüche

1. Vorrichtung (1) zur Wiedergewinnung von Spritznebeln (3.2) aus Spritzlackierkabinen (2), umfassend
- eine vertikale Außenwand (1.1), eine horizontale Decke (1.2) und einen horizontalen Boden (1.3), die einen geschlossenen Raum bilden;
- mindestens eine Spritzlackierkabine (2) mit einer Luftzuleitung (2.1), einem Verteilerraum (2.2), einer horizontal angeordneten, luftdurchlässigen Filterdecke (2.3), einer Luftströmung (2.5) in den Spritzkabinenraum (2.6), in dem mindestens ein mit einem Spritzlack (2.4.3) zu lackierendes Objekt (2.7) platziert ist, mindestens einer Spritzlackiervorrichtung (2.4) mit mindestens einer Sprühdüse (2.4.1) sowie einem horizontalen, luft- und spritznebeldurchlässigen Siebboden (2.9);
- mindestens eine Vorrichtung (3) zur Wiedergewinnung von Spritznebeln (3.2) mit mindestens einer Spritznebellenkung (3.1), die unterhalb des Siebbodens (2.9) angeordnet ist, einem nach unten strömenden Spritznebel (3.2), mindestens einem horizontalen, luft- und spritznebeldurchlässigen Siebboden (3.3), mindestens einer darunter angeordneten Verwirbelungskammer (3.6) mit mindestens einer Kältemittelzuleitung (3.5) mit mehreren Kältemitteldüsen (3.5.2) zur Zuleitung und Eindüsung mindestens eines Kältemittels (3.5.1) in die mindestens eine Verwirbelungskammer (3.6), die mindestens eine Vorrichtung zur Bildung von Luft- und Spritznebelwirbel (3.6.1) zur Verwirbelung der Graupel- und/oder Grieselpartikel (3.6.2) aufweist, einem am unteren Ende der mindestens einen Verwirbelungskammer (3.6) angeordneten horizontalen, luft- und partikeldurchlässigen Siebboden (3.6.3), einer darunter angeordneten Luft- und Partikellenkung (3.8), mindestens einer darunter angeordneten Vorrichtung (3.9) zur Abscheidung der Partikel (3.6.2) aus der Gasphase mit einem Austrag (3.9.1) für die Partikel (3.6.2), mindestens einem darunter angeordneten Auffangbehälter (3.10), worin sich wiedergewonnener Spritzlack (3.10.1) befindet; sowie
- mindestens einen zwischen dem Trennboden (3.7), der den Siebboden (3.6.3) hält, und dem horizontalen Boden (1.3) angeordneten Abluftkanal (4).

2. Vorrichtung (1) nach Anspruch 1, **dadurch gekennzeichnet, dass** es sich bei dem Spritzlack (2.4.3) um einen wässrigen oder lösemittelhaltigen, physikalisch trocknenden Lack, oxidativ härtenden Lack, Zweikomponentenlack, Einbrennlack oder strahlenhärtbaren Lack handelt.

3. Vorrichtung (1) nach Anspruch 1 oder 2, **dadurch gekennzeichnet, dass** es sich bei dem Spritzlack (2.4.3) um einen Schiffslack, Bautenlack, Möbellack, Kraftfahrzeuglack, Klarlack, Unidecklack, Basislack, Füller, Steinschlagschutzlack, Unterbodenschutzlack und Reparaturlack handelt.

4. Vorrichtung (1) nach einem der Ansprüche 1 bis 3, **dadurch gekennzeichnet, dass** sich die lichte Weite der mindestens einen Spritznebellenkung (3.1) von dem Siebboden (2.9) zu dem Siebboden (3.3) hin verjüngt.

5. Vorrichtung (1) nach einem der Ansprüche 1 bis 4, **dadurch gekennzeichnet, dass** das mindestens eine Kältemittel (3.5.1) eine Temperatur von -190 °C bis 0 °C hat und bei Raumtemperatur und unter Atmosphärendruck ein Gas ist.

6. Vorrichtung (1) nach einem der Ansprüche 1 bis 5, **dadurch gekennzeichnet, dass** die mindestens eine Vorrichtung (3.9) zur Abscheidung der Partikel (3.6.2) aus der Gasphase eine mehrstufige Zentrifuge und/oder ein Zyklon ist.

7. Vorrichtung (1) nach einem der Ansprüche 1 bis 6, **dadurch gekennzeichnet, dass** die mindestens eine Spritzlackiervorrichtung (2.4) ein Lackierroboter oder eine manuell geführte Spritzpistole ist,

8. Vorrichtung (1) nach einem der Ansprüche 1 bis 7, **dadurch gekennzeichnet, dass** sie aus korrosionsfesten, gegenüber Lösemitteln und Wasser resistenten sowie gegenüber Kälte und Hitze sowie raschen Temperaturwechseln stabilen Materialien, ausgewählt aus der Gruppe, bestehend aus gegenüber Säuren und Basen stabilen Klinkern für die Außenwände, spezielle Kartonagen für die Filterdecke, gegenüber Kälte und Hitze stabilen Kunststoffen, die in der Kälte nicht verspröden und in der Hitze unter Belastung nicht kriechen, sowie V2A-Stahl oder V4A- Stahl, aufgebaut ist.

9. Verfahren zur Wiedergewinnung von Spritznebeln (3.2) aus Spritzlackierkabinen (2), **dadurch gekennzeichnet, dass** man hierfür eine Vorrichtung (1) gemäß einem der Patentansprüche 1 bis 8 verwendet.

10. Verfahren nach Anspruch 9, **dadurch gekennzeichnet, dass** man hierbei
(a) dem Spritzkabinenraum (2.6) mindestens einer Spritzlackierkabine (2) über mindestens eine Luftzuleitung (2.1), mindestens einen Verteilerraum (2.2) und mindestens eine horizontal angeordnete, luftdurchlässige Filterdecke (2.3) eine laminare Luftströmung (2.5) zuführt;
(b) in den Spritzkabinenraum (2.6) mindestens ein zu lackierendes Objekt (2.7) hängend oder stehend platziert und mithilfe mindestens einer manuell geführten Spritzlackierpistole (2.4) oder mindestens eines computergesteuerten Spritzlackierroboters (2.4), die jeweils mindestens eine Sprühdüse (2.4.1) aufweisen, mit einem Spritzlack (2.4.3) lackiert;
(c) den entstehenden, nach unten strömenden Spritznebel (3.2) über mindestens einen horizontalen, luft- und spritznebeldurchlässigen Siebboden (2.9), mindestens eine darunter angeordnete Spritznebellenkung (3.1) und mindestens einen horizontalen, luft- und spritznebeldurchlässigen Siebboden (3.3) mindestens einer darunter angeordneten Verwirbelungskammer (3.6) zuführt;
(d) den Spritznebel (3.2) in der mindestens einen Verwirbelungskammer (3.6) zusammen mit mindestens einem über mindestens eine Kältemittelzuleitung (3.5) aus mehreren Kältemitteldüsen (3.5.2) eingedüsten Kältemittel (3.5.1) verwirbelt, so dass sich Luft- und Spritznebelwirbel (3.6.1) bilden, in denen aus dem Spritznebel (3.2) Graupel- und/oder Grieselpartikel (3.6.2) entstehen, die nach unten fallen;
(e) die Partikel (3.6.2) durch einen am unteren Ende der mindestens einen Verwirbelungskammer (3.6) angeordneten horizontalen, luft- und partikeldurchlässigen Siebboden (3.6.3) hindurchtreten lässt und über mindestens eine darunter angeordnete Luft- und Partikellenkung (3.8) mindestens einer Vorrichtung (3.9) zur Abscheidung der Partikel (3-6,2) aus der Gasphase zuführt, worin die Partikel (3.6.2) als Pulver anfallen;
(f) das Pulver aus den Partikeln (3.6.2) über einen Austrag (3.9.1) mindestens einem Auffangbehälter (3.10) zuführt und darin aufschmilzt, so dass wiedergewonnener Spritzlack (3.10.1) entsteht; und
(g) die zugeführte Luft (2.5) und das gasförmige Kältemittel (3.5.1) über mindestens einen Abluftkanal (4) entfernt.

11. Verfahren nach Anspruch 9 oder 10, **dadurch gekennzeichnet, dass** der wiedergewonnene Spritzlack (3.10.1) wieder als Spritzlack (2.4.3) verwendet wird.

12. Verfahren nach einem der Ansprüche 9 bis 11, **dadurch gekennzeichnet, dass** die mindestens eine Vorrichtung (3.9) zur Abscheidung der Partikel (3.6.2) aus der Gasphase mindestens eine mehrstufige Zentrifuge oder mindestens ein Zyklon ist.

13. Verfahren nach Anspruch 12, **dadurch gekennzeichnet, dass** die mindestens eine mehrstufige Zentrifuge (3.9) eine zweistufige Zentrifuge ist.

## Claims

1. A device (1) for the recovery of spray mist (3.2) from spray paint booths comprising
- a vertical outer wall (1.1), a horizontal ceiling (1,2) and a horizontal floor (1.3) which together form a closed space;
- at least one spray paint booth (2) with an air inlet (2.1), a distributor space (2.2), a horizontally arranged air permeable filter ceiling (2.3), an airstream (2.5) into the space (2.6) of the spray paint booth, wherein at least one object (2.7) to be painted with a spray paint (2.4.3) is placed, at least one spray paint device (2.4) with at least one spray nozzle (2.4.1), and a horizontal, air and spray mist permeable sieve floor (2.9);
- at least one device (3) for the recovery of spray mist (3.2) with at least one spray mist guiding system (3.1), which is arranged underneath the sieve floor (2.9), a spray mist (3.2) streaming downwards, at least one turbulence chamber (3.6), which is arranged underneath with at least one cooling agent inlet (3.5) having cooling agent nozzles (3.5.2) for the inlet and injection of at least one cooling agent (3.5.1) into the at least one turbulence chamber (3.6), which has at least one device for the formation of air and spray mist vortices (3.6.1) in order to form turbulences of the sleet and/or soft hail particles (3.6.2), one horizontally arranged air and particle permeable sieve floor (3.6.3) at the lower end of the at least one turbulence chamber (3.6), an air and particle guiding device (3.8) arranged underneath, at least one device (3.9) arranged underneath for the separation of the particles (3.6.2) from the gas phase, a discharge unit (3.9.1) for the particles (3.6.2), and at least one collecting vessel (3.10), wherein the recovered spray paint (3.10.1) is collected; and
- at least one exhaust air duct (4) arranged between the separator floor (3.7) holding the sieve floor (3.6.3) and the horizontal floor (1.3).

2. The device (1) of claim 1, **characterized in that** the spray paint (2.4.3) involves an aqueous or solvent-containing, physically drying varnish, an oxidatively hardening varnish, a two-component varnish, a baking varnish or a radiation hardening varnish.

3. The device (1) of claim 1 or 2, **characterized in that** the spray paint (2.4.3) involves varnishes or lacquers for ships, buildings, furniture, automobiles, clear coats, topcoats, base coats, fillers, stone chip protection, underfloor protection and repair coatings.

4. The device (1) of anyone of the claims 1 to 3, **characterized in that** the clear span of the at least one spray mist guiding system (3.1) is tapering off from the sieve floor (2.9) to the sieve floor (3.3).

5. The device (1) of anyone of claims 1 to 4, **characterized in that** the at least one cooling agent (3.5.1) has a temperature of from -190°C to 0°C and is a gas at room temperature.

6. The device (1) of anyone of the claims 1 to 5, **characterized in that** that the at least one device (3.9) for the separation of the particles (3.6.2) from the gas phase is a multistage centrifuge and/or cyclone.

7. The device (1) of anyone of the claims 1 to 6, **characterized in that** the at least one spray paint device (2.4) is a painting robot or a manually guided painting gun.

8. The device (1) of anyone of the claims 1 to 7, **characterized in that** it is made from corrosion resistant and solvent and water resistant materials as well as materials which are stable against cold and heat and fast temperature changes, the materials being selected from the group consisting of clinker bricks which are stable against acids and bases for the outer walls, special cardboards for the filter ceilings, plastics which are stable against cold and heat and which do not in embrittle in the cold and do not creep in the heat under load as well as V2A steel and V4A steel.

9. A process for the recovery of spray paint mist (3.2) from spray paint booths (2), **characterized in that** a device (1) according to anyone of the claims 1 to 8 is used therefore.

10. The process of claim 9, **characterized in that**
(a) a laminar airstream (2.5) is fed into the spray paint booth (2) via at least one air inlet (2.1), at least one distributor space (2.2) and at least one horizontally arranged air permeable filter ceiling (2.3);
(b) at least one object (2.7) is placed hanging or standing in the space (2.6) of the spray paint booth (2) and is painted with the help of at least one manually guided spray paint gun (2.4) or of at least one computer controlled spray paint robot (2.4), which both comprise at least one spray nozzle (2.4.1);
(c) the resulting downwards streaming spray paint mist (3.2) is fed into at least one turbulence chamber (3.6) arranged underneath via at least one horizontally arranged air and spray mist permeable sieve floor (2.9), at least one spray mist guiding device (3.1) arranged underneath and at least one horizontally arranged air and paint spray mist permeable sieve floor (3.3);
(d) the spray mist (3.2) is swirled in the at least one turbulence chamber (3.6) together with at least one cooling agent (3.5.1) injected from several cooling agent nozzles (3.5.2) so that air and spray mist turbulences are formed, wherein sleet and soft hail particles (3.6.2) arise out of the spray mist (3.2), which particles (3.6.2) are falling downwards;
(e) the particles (3.6.2) are fed through the horizontally arranged air and particle permeable sieve floor (3.6.3) arranged underneath the turbulence chamber (3.6) and through at least one air and particle guiding device (3.8) arranged underneath into at least one device (3.9) for the separation of the particles (3.6.2) from the gas phase as a powder;
(f) the powder consisting of the particles (3.6.2) is fed through a discharge unit (3.9.1) into collecting vessel (3.10) and is melted therein so that the recovered spray paint (3.10.1) results; and
(g) the supplied air (2.5) and the gaseous cooling agent (3.5.1) are removed through at least one exhaust air duct (4).

11. The process of claim 9 or 10, **characterized in that** the recovered spray paint (3.10.1) is used again as the spray paint (2.4.3).

12. The process of anyone of the claims 9 to 11, **characterized in that** the device (3.9) for the separation of the particles (3.6.2) from the gas phase is at least one multistage centrifuge or a cyclone.

13. The process of claim 12, **characterized in that** the at least one multistage centrifuge (3.9) is the two-stage centrifuge

## Revendications

1. Dispositif (1) pour la récupération du brouillard de pulvérisation (3.2) des cabines de peinture par pulvérisation comprenant
- une paroi extérieure verticale (1.1), un plafond horizontal (1.2) et un plancher horizontal (1.3) qui forment ensemble un espace fermé;
- au moins une cabine de peinture au pistolet (2) avec une entrée d'air (2.1), un espace de distribution (2.2), un plafond filtrant perméable à l'air disposé horizontalement (2.3), un courant d'air (2.5) dans l'espace (2.6) du spray cabine de peinture, dans laquelle au moins un objet (2.7) à peindre avec une peinture en aérosol (2.4.3) est placé, au moins un dispositif de peinture en aérosol (2.4) avec au moins une buse de pulvérisation (2.4.1), et un , fond de tamis perméable à l'air et au brouillard de pulvérisation (2.9);
- au moins un dispositif (3) pour la récupération du brouillard de pulvérisation (3.2) avec au moins un système de guidage du brouillard de pulvérisation (3.1), qui est disposé sous le fond de tamis (2.9), un brouillard de pulvérisation (3.2) coulant vers le bas, en au moins une chambre de turbulence (3.6), qui est disposée en dessous avec au moins une entrée d'agent de refroidissement (3.5) comportant des buses d'agent de refroidissement (3.5.2) pour l'entrée et l'injection d'au moins un agent de refroidissement (3.5.1) dans au moins une chambre de turbulence (3.6), qui comporte au moins un dispositif pour la formation de vortex d'air et de brouillard de pulvérisation (3.6.1) afin de former des turbulences du grésil et / ou des particules de grêle douce (3.6.2), horizontalement un fond de tamis perméable à l'air et aux particules (3.6.3) disposé à l'extrémité inférieure de la au moins une chambre de turbulence (3.6), un dispositif de guidage d'air et de particules (3.8) disposé en dessous, au moins un dispositif (3.9) disposé en dessous pour le séparation des particules (3.6.2) de la phase gazeuse, une unité de décharge (3.9.1) pour les particules (3.6.2), et à au moins un récipient de collecte (3.10), dans lequel la peinture en aérosol récupérée (3.10.1) est collectée; et
- au moins un conduit d'évacuation d'air (4) disposé entre le fond séparateur (3.7) supportant le fond tamis (3.6.3) et le fond horizontal (1,3).

2. Dispositif (1) selon la revendication 1, **caractérisé en ce que** la peinture en aérosol (2.4.3) fait intervenir un vernis aqueux ou solvant, séchant physiquement, un vernis durcissant par oxydation, un vernis à deux composants, un vernis de cuisson ou un vernis durcissant par rayonnement.

3. Dispositif (1) selon la revendication 1 ou 2, **caractérisé en ce que** la peinture en aérosol (2.4.3) fait intervenir des vernis ou des laques pour navires, bâtiments, meubles, automobiles, vernis clair, couches de finition, couches de base, protection contre les éclats de pierre, revêtements de protection et laques de réparation.

4. Dispositif (1) selon l'une quelconque des revendications 1 à 3, **caractérisé en ce que** la portée libre du au moins un système de guidage de brouillard de pulvérisation (3.1) diminue progressivement du fond de tamis (2.9) au fond de tamis (3.3).

5. Dispositif (1) selon l'une quelconque des revendications 1 à 4, **caractérisé en ce que** le au moins agent de refroidissement (3.5.1) a une température de -190 ° C à 0 ° C et est un gaz à température ambiante.

6. Dispositif (1) selon l'une quelconque des revendications 1 à 5, **caractérisé en ce que** le au moins un dispositif (3.9) pour la séparation des particules (3.6.2) de la phase gazeuse est une centrifugeuse à plusieurs étages et / ou cyclone.

7. Dispositif (1) selon l'une quelconque des revendications 1 à 6, **caractérisé en ce que** le au moins un dispositif de pulvérisation de peinture (2.4) est un robot de peinture ou un pistolet de peinture à guidage manuel.

8. Dispositif (1) selon l'une quelconque des revendications 1 à 7, **caractérisé en ce qu'**il est réalisé à partir de matériaux résistants à la corrosion et aux solvants et à l'eau ainsi que de matériaux stables au froid et à la chaleur et aux changements rapides de température, les matériaux étant choisis dans le groupe constitué des briques de clinker stables aux acides et aux bases pour les murs extérieurs, des cartons spéciaux pour les plafonds filtrants, des plastiques stables au froid et à la chaleur et qui ne se fragilisent pas au froid et ne se glissent pas dans le chaleur sous charge ainsi que l'acier V2A et l'acier V4A.

9. Procédé de récupération du brouillard de peinture par pulvérisation (3.2) des cabines de peinture par pulvérisation (2), **caractérisé en ce que** l'on utilise donc un dispositif (1) selon l'une quelconque des revendications 1 à 8.

10. Procédé selon la revendication 9, **caractérisé en ce que**
(a) un courant d'air laminaire (2.5) est introduit dans la cabine de peinture par pulvérisation (2) via au moins une entrée d'air (2.1), au moins un espace de distribution (2.2) et au moins un plafond filtrant perméable à l'air (2,3) disposé horizontalement;
b) au moins un objet (2.7) est placé suspendu ou debout dans l'espace (2.6) de la cabine de peinture en aérosol (2) et est peint à l'aide d'au moins un pistolet à peinture en aérosol (2.4) à guidage manuel ou d'au moins au moins un robot de pulvérisation de peinture commandé par ordinateur (2.4), qui comprennent tous deux au moins une buse de pulvérisation (2.4.1);
(c) le brouillard de peinture en aérosol (3.2) qui s'écoule vers le bas qui en résulte est introduit dans au moins une chambre de turbulence (3.6) disposée en dessous via au moins un fond de tamis perméable à l'air et au brouillard de pulvérisation (2.9) disposé horizontalement, au moins un dispositif de guidage de brouillard de pulvérisation (3.1) disposés en dessous et au moins un fond de tamis perméable au brouillard d'air et de peinture (3.3) disposé horizontalement;
(d) le brouillard de pulvérisation (3.2) est tourbillonné dans la au moins une chambre de turbulence (3.6) avec au moins un agent de refroidissement (3.5.1) injecté à partir de plusieurs buses d'agent de refroidissement (3.5.2) de sorte que l'air et le brouillard de pulvérisation des turbulences se forment, dans lesquelles des particules de grêle et de grêle douce (3.6.2) se forment hors du brouillard de pulvérisation (3.2), lesquelles particules (3.6.2) tombent vers le bas;
(e) les particules (3.6.2) sont acheminées à travers le fond de tamis perméable à l'air et aux particules disposé horizontalement (3.6.3) disposé sous la chambre de turbulence (3.6) et à travers au moins un dispositif de guidage d'air et de particules (3.8) disposé en dessous, dans au moins un dispositif (3.9) pour la séparation des particules (3.6.2) de la phase gazeuse sous forme de poudre;
(f) la poudre constituée des particules (3.6.2) est introduite à travers une unité de décharge (3.9.1) dans le récipient de collecte (3.10) et y est fondue de sorte que la peinture en aérosol récupérée (3.10.1) en résulte; et
(g) l'air fourni (2.5) et l'agent de refroidissement gazeux (3.5.1) sont évacués par au moins un conduit d'évacuation d'air (4).

11. Procédé selon la revendication 9 ou 10, **caractérisé en ce que** la peinture aérosol récupérée (3.10.1) est réutilisée comme peinture aérosol (2.4.3).

12. Procédé selon l'une quelconque des revendications 9 à 11, **caractérisé en ce que** le dispositif (3.9) de séparation des particules (3.6.2) de la phase gazeuse est au moins une centrifugeuse à plusieurs étages ou un cyclone.

13. Procédé selon la revendication 12, **caractérisé en ce que** la au moins une centrifugeuse à plusieurs étages (3.9) est la centrifugeuse à deux étages
